# FASCICULE DE BREVET EUROPEEN

(11) **EP 1 051 784 B1**
(45) Date de publication et mention de la délivrance du brevet: **29.10.2003**
(21) Numéro de dépôt: 99901676.9
(22) Date de dépôt: 01.02.1999
(51) Int. Cl.: H02G 1/08, G02B 6/44

(54) **PROCEDE D'INSTALLATION ET/OU DE RETRAIT D'UN CABLE DANS DES CONDUITES DE PASSAGE DE CABLES ET DISPOSITIF DE MISE EN OEUVRE**
INSTALLATIONS UND ODER HERAUSZIEHVERFAHREN EINES KABELS IN ODER AUS KABELPASSAGEN UND VORRICHTUNG ZUR VERFAHRENSDURCHFÜHRUNG
METHOD FOR INSTALLING AND/OR REMOVING A CABLE IN CABLE PASSAGE CONDUITS AND IMPLEMENTING DEVICE

(30) Priorité: 04.02.1998 FR 9801242
(43) Date de publication de la demande: 15.11.2000
(73) Titulaire: FRANCE TELECOM, 75015 Paris (FR)
(72) Inventeur: PECOT, Alain, F-22300 Lannion (FR); CAMPION, Jean-Luc, F-22700 Saint Quay Perros (FR); LE CAM, Joel, F-22300 Lannion (FR)
(74) Mandataire: Ballot, Paul
(86) Numéro de dépôt international: FR9900201
(87) Numéro de publication internationale: WO99040660

(56) Documents cités:
- EP-A- 0 264 767
- EP-A- 0 427 354
- EP-A- 0 445 858
- EP-A- 0 467 463
- WO-A-92/17927
- WO-A-94/09538

## Description

La présente invention se rapporte à un procédé d'installation et/ou de retrait de câble dans des conduites de passage de câbles. Elle a plus particulièrement pour objet non seulement l'installation et/ou le retrait de câbles à fibres optiques mais aussi le retrait de câbles en cuivre qui occupent la plupart des conduites et qui peuvent être récupérés pour d'autres utilisations. L'invention concerne par ailleurs un dispositif de mise en oeuvre de ce procédé.

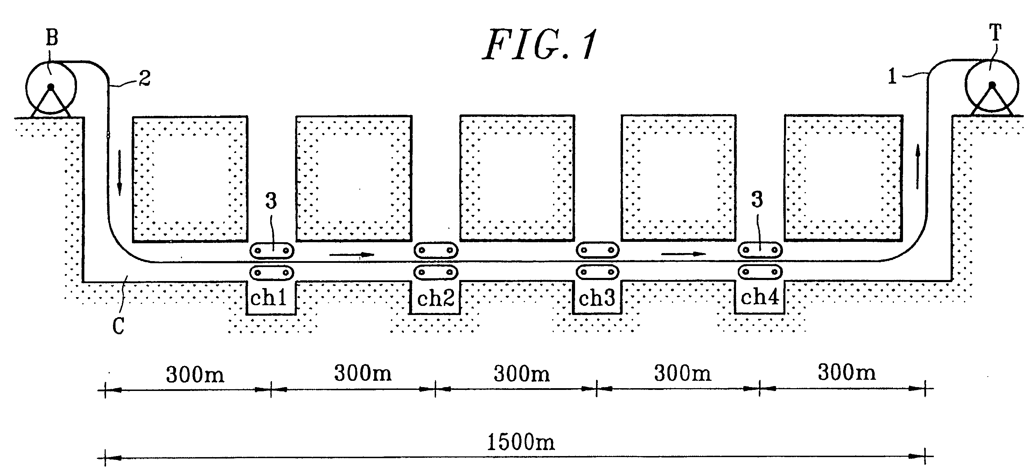

Les procédés classiques d'installation de câble dans des conduites de passage de câbles sont souvent très coûteux, longs à mettre en oeuvre, et peuvent conduire en une détérioration rapide du câble due à son frottement contre les parois internes des conduites. Un procédé classique, illustré par le schéma de la figure 1, consiste à placer un treuil T à une extrémité du parcours et à placer une bobine B de câble 2 à l'autre extrémité du parcours. Il consiste ensuite à faire passer le filin 1 du treuil T dans les conduites C, puis à accrocher l'extrémité du filin 1 à une extrémité du câble 2 à introduire. L'installation du câble 2 dans les conduites C s'effectue ensuite par tirage, en actionnant le treuil T, dans le sens des flèches représentées sur la figure 1. D'autre part, des systèmes à chenilles 3 doivent nécessairement être placés régulièrement le long du parcours afin d'assurer un maintient et un guidage du câble 2. Ces systèmes à chenilles 3 sont donc placés dans les chambres souterraines Ch1, Ch2, Ch3, Ch4 qui sont en général espacées les unes des autres d'une distance de 300 m. Le mouvement continu de ces systèmes à chenilles 3 doit en outre être synchronisé avec la vitesse de tirage imposée par le treuil T. Par conséquent, ce procédé nécessite la présence d'un agent sur chaque poste actif, c'est à dire à chaque extrémité du parcours et dans les chambres souterraines dans lesquelles sont prévues les assistances intermédiaires, afin de veiller au bon déroulement des opérations.

Ce procédé nécessite donc l'utilisation de matériel lourd, encombrant et souvent coûteux et la mobilisation d'un grand nombre d'agents. De plus, pour éviter une dégradation du câble à installer due à son frottement contre les parois des conduites, le parcours doit être relativement rectiligne. La longueur du parcours est en outre limitée à la fois par la longueur du filin du treuil, le nombre d'agents à mobiliser et la forme du trajet à effectuer entre le central téléphonique et un abonné. Ce trajet comportant nécessairement des courbures, il est découpé en tronçons rectilignes. La longueur maximale de ces tronçons est en général de l'ordre de 1500 m. Sur un tel tronçon de 1500 m, le procédé requiert la présence de 6 agents sur le site.

D'autre part, ce procédé nécessite l'injection de lubrifiants pour éviter une dégradation trop rapide du câble par frottement contre les parois des conduites. Cependant, dans ce procédé la dégradation du câble reste inévitable car les frottements ne peuvent être complètement évités.

Par conséquent, l'installation classique d'un câble dans des conduites est longue à mettre en oeuvre, et très coûteuse du fait notamment de la mobilisation importante du personnel. De plus, le parcours défini par les conduites doit être découpé en petits tronçons relativement rectilignes. Les câbles doivent en outre présenter un très faible taux de remplissage des conduites, typiquement inférieur à 20 %, pour éviter le plus possible Les frottements contre les parois des conduites.

Le taux de remplissage est défini comme étant le rapport du diamètre du câble au diamètre intérieur de la conduite.

D'autres méthodes ont été élaborées ces dernières années en vue d'améliorer les procédés classiques, et notamment en vue d'abaisser leur coût et de raccourcir les durées de mises en oeuvre. Ces méthodes sont basées sur la technique de "flottage". Elles consistent à acheminer un courant d'eau dans les conduites afin de faciliter le transport du câble et de diminuer les risques de frottements du câble contre les parois. Un écoulement d'eau étant créé, le câble a naturellement tendance à se centrer dans le flux d'eau.

La demande de brevet EP-A-0 264 767 décrit un procédé d'introduction de câble optique immergé dans une conduite grâce au frottement de l'eau sur le câble. Dans ce cas, le câble présente un taux de remplissage de la conduite relativement faible, puisqu'il est de l'ordre et 14 %, pour éviter au maximum les frottements contre les parois de la conduite. Ce procédé nécessite en outre l'utilisation de flotteurs qui sont placés régulièrement le long du câble. Ces flotteurs permettent non seulement un meilleur soutient du câble mais aussi d'améliorer le déplacement du câble du fait du frottement de l'eau sur ces flotteurs. Cependant, rien n'indique dans ce document si une régulation du débit d'eau est nécessaire et encore moins comment réaliser une telle régulation. L'avancement du câble est obtenu grâce au seul frottement de l'eau sur le câble et les flotteurs. Ce procédé reste donc limité puisqu'il ne permet pas d'installer des câbles présentant un taux de remplissage de la conduite très défavorable et pouvant atteindre 90 %, ni de réaliser l'installation sur un parcours très sinueux présentant une longueur supérieure à 2000 m. De plus, ce procédé ne permet pas de retirer des câbles occupant les conduites.

La demande de brevet WO 94/09538 décrit un procédé d'introduction d'un câble dans des conduites à l'intérieur desquelles circule un courant d'eau. Selon ce procédé, le câble est mu par une assistance mécanique. En fait, ce procédé est basé sur la technique de flottage combiné au tirage. En effet, il consiste à placer, sur l'extrémité avant du câble, un piston qui est actionné par la pression de l'eau circulant dans la conduite, de manière à tirer le câble. Un système destiné simplement à guider le câble, afin que celui-ci soit correctement introduit dans une conduite et centré dans le flux d'eau, est prévu à l'entrée de la conduite.

Dans ce cas une variation de la pression de l'eau entraîne une variation de la force de tirage du piston et donc une variation de la vitesse de déplacement du câble. Cependant, le tirage n'assure pas un bon maintient et un bon guidage du câble sur une grande longueur. De plus une variation trop importante de la pression d'eau entraîne une variation brutale de la vitesse de déplacement du piston et influe donc sur le maintient du câble dans le flux d'eau. Le câble risque en effet de se déporter plus ou moins et de venir frotter contre les parois des conduites, surtout au niveau des raccords de conduites ou dans les courbures, ce qui entraîne une détérioration de sa gaine.

Le débit et la pression d'eau ne sont pas constant tout le long du parcours, ils sont plus importants au point d'injection de l'eau et d'introduction du câble, et ils diminuent au fur et à mesure que le câble avance dans la conduite et s'éloigne du point d'injection. Il faut donc augmenter la pression de l'eau au fur et à mesure que le piston s'éloigne, afin de garder une vitesse d'avancement du câble satisfaisante. Toutefois, cette pression ne doit pas être trop importante pour ne pas entraîner un placage du câble contre les parois des conduites.

Ce procédé ne permet donc pas d'installer des câbles présentant un taux de remplissage élevé et pouvant atteindre 90 %. En outre, il n'est pas adapté à des parcours très sinueux sur une longueur d'au moins 2000 m.

La demande de brevet WO 92/17927 décrit un autre procédé d'installation de câbles dans des conduites par pression d'un fluide (de l'eau) circulant dans ces conduites.

Le procédé décrit dans ce document comprend des moyens mécaniques d'avancement (bobine) du câble à une vitesse aussi uniforme que possible. Lorsque la première extrémité du câble est introduite dans la première extrémité de la conduite, un fluide (eau) est simultanément injecté dans la conduite afin d'exercer sur le câble une force de flottaison et une force d'entraînement permettant au câble d'atteindre l'autre extrémité de la conduite. Le débit du fluide dépend donc du type de câble qui doit parcourir la conduite, et sa valeur est calculée en fonction de l'énergie nécessaire à l'entraînement du câble.

Par ailleurs, les procédés qui viennent d'être décrits ne permettent pas de retirer des câblas de cuivre et/ou optiques occupant les conduites sans les abîmer. Or, il peut être intéressant de retirer ces câbles en les conservant intacts en vue de les réutiliser pour d'autres applications.

La présente invention permet de pallier les inconvénients précités. En effet, elle propose un procédé d'introduction et/ou de retrait d'un câble dans des conduites définissant un parcours très sinueux et supérieur à 2000 m, le câble présentant une configuration de taux de remplissage très défavorable et pouvant atteindre 90 %, procédé selon lequel le câble est déplacé non plus par un effet de tirage mais grâce à une force de poussée à laquelle il est soumis.

L'invention se rapporte plus particulièrement à un procédé d'introduction et/ou de retrait de câble dans des conduites de passage de câbles à l'intérieur desquelles est acheminé un courant d'eau, le câble présentant un taux de remplissage des conduites pouvant atteindre 90%, et les conduites formant un parcours sinueux sur une longueur supérieure à 2000 m, le câble étant soumis à une force de poussée qui commande sa vitesse d'avancement, et en ce que ladite force de poussée et la pression de l'eau circulant dans les conduites étant régulées de manière à maintenir un débit d'eau constant à l'intérieur des conduites caractérisé en ce que le procédé comprend en outre une étape de mesure de la longueur de câble dans le conduit, ladite force de poussée et la pression de l'eau étant régulées en fonction de la longueur de câble mesurée.

Le débit d'eau étant constant et contrôlé dans les conduites, le câble est porté de la même manière le long des conduites, ce qui permet de limiter considérablement les risques de chocs contre les parois des conduites.

Le procédé selon l'invention est rapide et évite l'emploi d'assistances intermédiaires. Il nécessite la présence d'un seul agent pour réaliser l'installation d'un câble dans des conduites définissant un parcours sinueux de longueur supérieure à 2000 m et pouvant atteindre 5 kilomètres, voire plus suivant le taux d'occupation des conduites. Par conséquent, le procédé selon l'invention est peu coûteux. Il permet d'autre part d'installer des câbles en fonction de la demande des abonnés; le procédé selon l'invention est donc rentable.

Un autre objet de l'invention se rapporte à un dispositif de mise en oeuvre du procédé selon l'invention. Ce dispositif présente l'avantage d'être peu encombrant et disposé sur une seule remorque tractable par un véhicule léger. Il est donc facile à déplacer sur un site. Il comprend:
- des moyens de poussée aptes à assurer l'avancement du câble, caractérisé en ce qu'il comprend en outre
- un moteur thermique apte à commander, par l'intermédiaire d'un système de commutation, soit un circuit hydraulique de mise sous pression, ledit circuit hydraulique étant relié à un réservoir d'eau et à un pistolet d'injection pour injecter de l'eau dans les conduites; soit un circuit à compression d'air, ledit circuit à compression d'air étant relié audit pistolet d'injection pour injecter de l'air comprimé dans les conduites, après la pose d'un câble, afin de les vidanger,
- des capteurs pour des mesures de longueur et de vitesse d'avancement du câble et une jauge de contrainte apte à mesurer l'effort exercé sur le câble, lesdits capteurs et ladite jauge étant en liaison avec
- une unité centrale apte à gérer les commandes qui lui sont transmises, pour piloter les moyens de poussée et le moteur thermique,
et en ce que ledit dispositif est disposé sur une remorque tractable par un véhicule léger.

D'autres avantages et particularités de l'invention apparaîtront clairement à la lecture de la description qui est donnée à titre d'exemple non limitatif et qui est faite en regard des figures annexées qui représentent :
- la figure 1, déjà décrite, un schéma d'un procédé classique de pose de câble,
- la figure 2, un schéma des différents éléments constitutifs d'un dispositif selon l'invention et des liaisons entre ces éléments,
- la figure 3, un schéma d'un circuit hydraulique de mise sous pression utilisé dans le dispositif selon l'invention,
- la figure 4, un schéma de principe du procédé et du dispositif selon l'invention,
- la figure 5, un schéma de principe d'un pousseur à galets,
- la figure 6, un schéma d'un embout destiné à être fixé sur l'extrémité du câble à installer,
- les figures 7A à 7C, des schémas de différents embouts utilisés pour la pose d'un câble dans des conduites occupées par un ou plusieurs câbles,
- la figure 8, un schéma d'un parcours sinueux le long duquel des câbles peuvent être installés grâce au procédé selon l'invention et à son dispositif de mise en oeuvre.

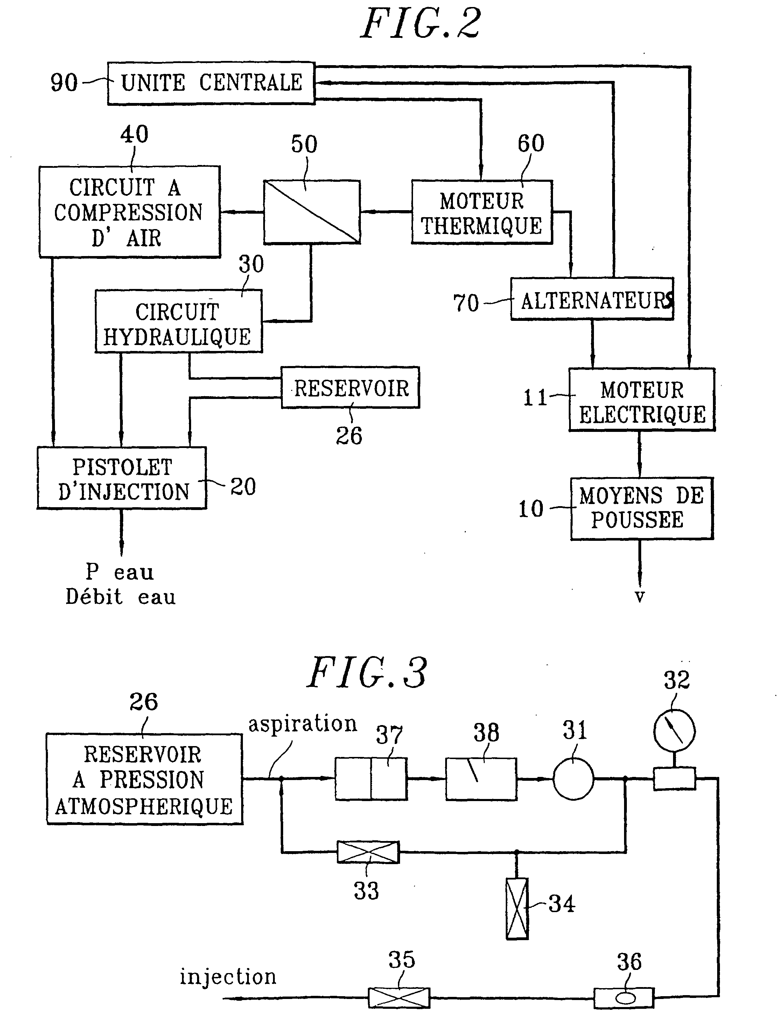

La figure 2 schématise les différents éléments constitutifs du dispositif selon l'invention et les liaisons entre ces différents éléments. Des moyens de poussée 10 exercent une force de poussée sur le câble à installer afin de lui transmettre une vitesse d'avancement v. Un moteur thermique 60 permet de commander, par l'intermédiaire d'un système de commutation 50, soit un circuit hydraulique de mise sous pression 30 soit un circuit de compression d'air 40. Le système de commutation 50 peut par exemple être un levier actionnable manuellement.

Le moteur thermique 60 entraîne de manière continue, via un jeu de poulies et de courroies, deux alternateurs 70. Le premier alternateur fourni le courant d'excitation du deuxième alternateur. Ces deux alternateurs permettent d'éviter l'utilisation d'une grosse batterie et de produire le courant électrique nécessaire pour alimenter d'une part un moteur électrique 11 commandant les moyens de poussée 10, et d'autre part une unité centrale 90.

L'unité centrale 90 permet la visualisation de plusieurs informations simultanément. Ces informations sont fournies par des capteurs de mesure et concernent notamment le débit d'eau circulant dans la conduite en litres par minutes, la longueur de câble engagée dans la conduite en mètres, la vitesse d'avancée de celui-ci en mètres par minute, et la pression d'eau en bar. Cette unité centrale 90 permet en outre de contrôler d'autres informations telles que notamment le courant et la tension appliqués au moteur électrique 11 commandant les moyens de poussée 10, afin d'évaluer la force de poussée exercée sur le câble.

L'unité centrale 90 permet en outre de gérer les commandes, qui lui sont transmises par un agent, pour piloter les moyens de poussée 10, via le moteur électrique 11, et le moteur thermique 60. Elle mémorise en outre, dans une mémoire appropriée, lesdites commandes et les mesures effectuées par les capteurs.

Il est d'autre part possible de fixer une valeur de consigne de vitesse à ne pas dépasser, c'est à dire une force de poussée maximale, au delà de laquelle les moyens de poussée s'arrêtent instantanément. Ceci permet d'éviter toute détérioration du câble qui pourrait être causée par exemple par un patinage intempestif de la gaine de celui-ci, ou encore par une force de poussée trop intense entraînant sa rupture.

Le circuit hydraulique 30 est relié d'une part à un pistolet d'injection 20 et d'autre part à un réservoir d'eau 26. Ce réservoir d'eau 26 est constitué d'une ou plusieurs tonnes à eau. Dans une variante de réalisation, l'alimentation en eau peut également être assurée grâce à un raccordement sur une borne incendie ou alors sur un simple robinet de puisage moyennant l'utilisation d'une cuve tampon.

Lorsque le moteur thermique 60 commande le circuit hydraulique de mise sous pression 30, l'eau issue du réservoir 26 est injectée dans les conduites, avec un certain débit et une certaine pression, via le pistolet d'injection 20. La pression de l'eau est réglable à partir de l'unité centrale 90 via le moteur thermique 60. Les détails du circuit de mise sous pression sont expliqués dans ce qui suit.

Lorsque le moteur thermique 60 commande le circuit de compression d'air 40, de l'air comprimé est injecté dans les conduites via le pistolet d'injection 20, afin de vidanger les conduites dans lesquelles un câble a été installé. Un manomètre indique la pression de sortie et une soupape de sécurité limite la pression de service à 12 bars.

L'ensemble du dispositif est regroupé sur une remorque tractable par un véhicule léger.

La figure 3 schématise le circuit de mise sous pression 30. Ce circuit permet de délivrer une pression allant jusqu'à 25 bars avec un circuit d'aspiration relié à un réservoir d'eau à pression atmosphérique 26.

Une pompe hydraulique 31, par exemple constituée par une pompe étagée à corps d'acier inoxydable, permet d'assurer la mise sous pression du circuit. Un manomètre 32 permet le contrôle de la pression lors de l'injection d'eau dans les conduites.

Une vanne de réglage 33 permet le réglage fin de la pression et sa stabilisation en fonction du débit utilisé. C'est sur cette vanne que l'unité centrale agit via le moteur thermique.

Une vanne de décharge 34 sert en outre à provoquer le retour au réservoir à pression atmosphérique 26 lorsque la vanne de sortie 35, permettant l'injection d'eau dans les conduites, est fermée. Cela évite le maintient en charge du circuit lorsque la consommation d'eau est nulle. De plus cette vanne de décharge 34 est de préférence située en un point haut pour faciliter la mise à l'air libre lors de l'opération de vidange des conduites après la pose d'un câble.

Par ailleurs, un débitmètre 36 délivre des impulsions traduites sur l'unité centrale par un affichage en l/min. Un filtre à tamis 37 limite le risque de pollution du circuit par des éléments de plus de 0,5 mm, ce qui est bien toléré par la pompe. Un système de sécurité manque d'eau 38 interdit en outre tout fonctionnement à vide de la pompe.

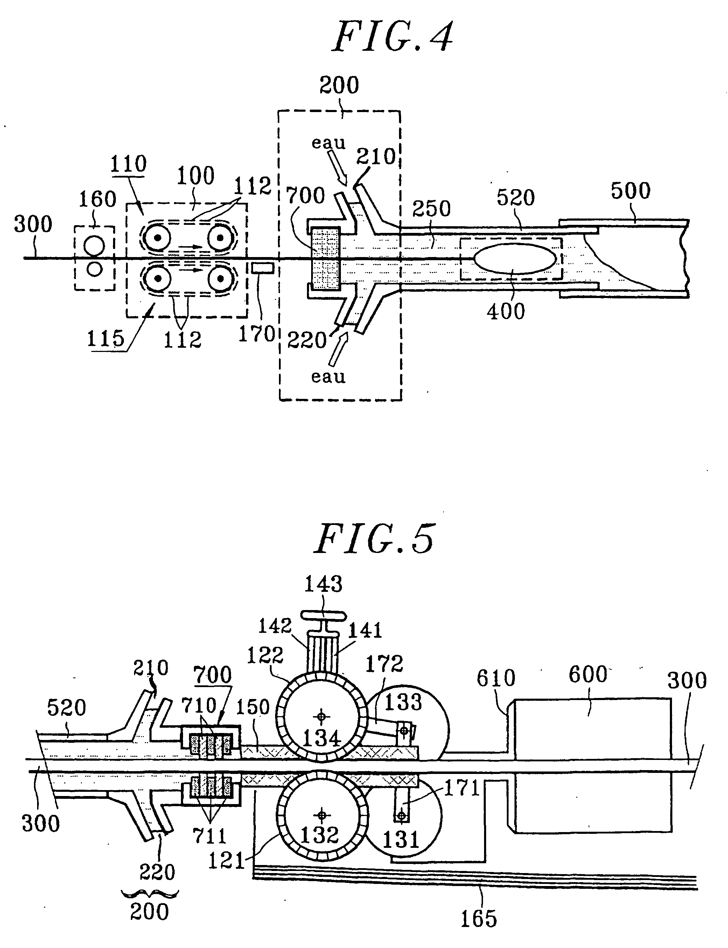

La figure 4 représente un schéma de principe du procédé et du dispositif de mise en oeuvre selon l'invention. Le procédé consiste à introduire un câble 300 dans une conduite 500 et à injecter de l'eau 250 sous pression variable au moyen d'un pistolet d'injection 200. Un écoulement d'eau se créant dans la canalisation 500, le câble tend à se centrer dans le flux. L'introduction du câble 300 dans la conduite 500, via un tube intermédiaire 520, se fait grâce à des moyens de poussée 100 qui exercent une force de poussée sur le câble.

Un capteur de longueur et de vitesse 160 est placé à l'arrière des moyens de poussée 100. Il est constitué de deux galets mobiles maintenus en pression par un ressort. Le câble chemine entre les deux galets, l'un d'eux présente un rainurage de manière à assurer le positionnement du câble, l'autre est moleté afin de limiter le risque d'erreur de mesure lié au glissement éventuel du câble. Ce capteur est évidemment en liaison directe avec l'unité centrale.

D'autre part, une jauge de contrainte 170, en liaison directe avec l'unité centrale et destinée à mesurée l'effort de poussée exercé sur le câble, est placée en avant des moyens de poussée 100.

Il est en outre avantageux de placer un embout calibré 400 à l'extrémité du câble 300. Cet embout calibré 400 se présente de préférence sous la forme d'une ogive et il permet de stabiliser le câble dans le flux et de le guider de manière à ce qu'il passe aisément les raccords entre les conduites et les courbures. Par ailleurs, il est important de maintenir une colonne d'eau, dans les conduites, sur toute la longueur du câble pendant son installation et cela quelque soit le profil du parcours. Il faut donc pour cela limiter la détente du fluide en extrémité de câble. Cette fonction est réalisée par l'embout. Cet embout est décrit de manière plus détaillée dans ce qui suit.

Un remplissage prématuré de la conduite serait pénalisant pour plusieurs raisons. Tout d'abord l'embout 400 pousserait une colonne d'eau, ce qui augmenterait prématurément les efforts de poussée nécessaires à la pose d'un câble. De plus, cela impliquerait une pose avec une pression maximale au point d'injection, afin de compenser la perte de charge sur l'ensemble du parcours; une consommation d'eau importante; une grande sollicitation du matériel et un temps de pose accru.

En ce qui concerne les moyens de poussée, deux versions ont été élaborées pour le dispositif selon l'invention. Une première version permet de répondre au problème de pose de petits câbles nécessitant des forces de poussée inférieures à 30 DaN (Déca Newton) et s'adaptant à leur petit diamètre, c'est le "pousseur à galets". Une seconde version beaucoup plus puissante répond à la mise en oeuvre de câbles volumineux et de forte capacité, dont le diamètre peut atteindre jusqu'à 30 mm, et tolérant des forces de poussée pouvant atteindre plus de 100 DaN, c'est le "pousseur à chenilles" ou "à patins".

Les deux types de pousseurs sont compacts, d'un poids raisonnable d'une dizaine de kg, et comportent une poignée pour faciliter leur transport.

La seconde version de pousseur à patins est schématisée sur la figure 4. Un moteur électrique, non représenté sur cette figure, permet d'entraîner deux systèmes 110, 115 à mouvement continu, munis de patins d'entraînement 112. Ces deux systèmes sont placés l'un au dessus de l'autre de manière à ce que le câble 300 soit pincé entre leurs patins d'entraînement 112 et poussé par lesdits patins dans un mouvement d'avancement dans le sens des flèches représentées sur la figure 4.

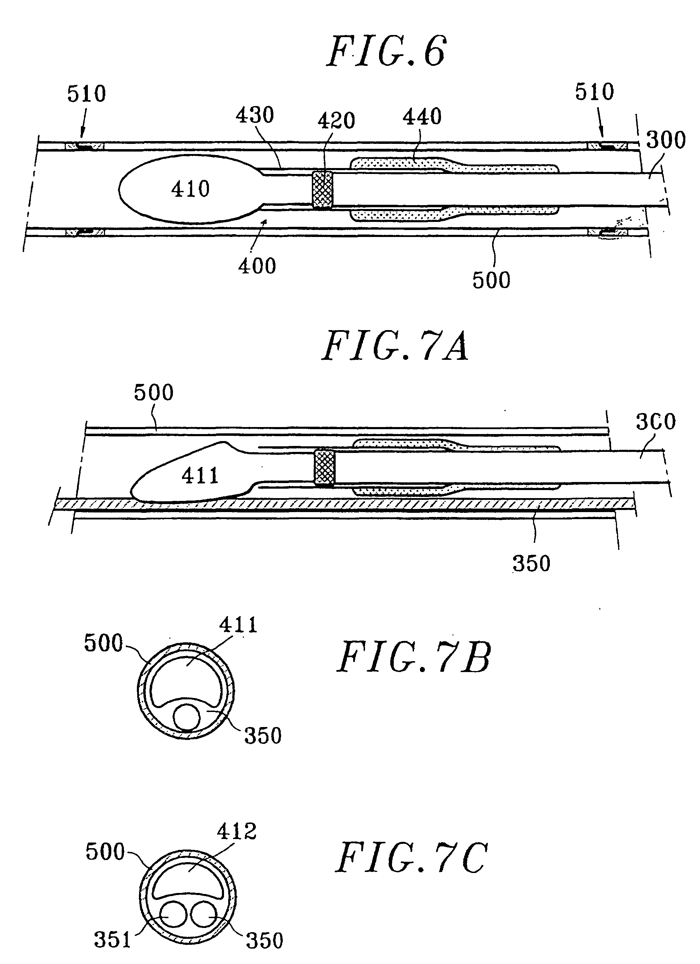

Le pousseur à galets est illustré sur le schéma de la figure 5. Un moteur électrique 600 à ventilation continue, éventuellement couplé à un réducteur de puissance 610, entraîne deux galets 121 et 122 via un jeu de quatre pignons 131, 132, 133, 134.

Le galet inférieur 121 est fixe par rapport au support 165. Sa rotation est assurée directement par les deux pignons 131 et 132 situés de part et d'autre.

Le galet supérieur 122 est mobile de manière à permettre un réglage en fonction du diamètre du câble à poser. Il est monté sur deux colonnes de guidage 141, 142 qui assurent le positionnement de son axe dans l'alignement de celui du galet inférieur 121. L'entraînement du galet supérieur 122 est assuré par les deux pignons mobiles 133 et 134 situés de part et d'autre de ce galet 122. Le pignon 134 est guidé, de la même façon que le galet supérieur 122, par les deux colonnes 141, 142.

Au cours du déplacement du pignon intermédiaire 133, son axe décrit un arc de cercle de manière à ce qu'il reste toujours en contact avec les pignons voisins 131 et 134 qui entraînent respectivement le galet inférieur 121 et le galet supérieur 122. Pour cela, deux brides 171, 172 assurent le maintient de l'entraxe des pignons 131, 133 et 133, 134. L'axe du pignon 133 sert donc à la fois de support et d'articulation.

Les galets présentent une tranche incurvée, de manière à épouser la forme du câble 300 et donc à augmenter la surface de contact avec celui-ci. De plus, leur tranche est recouverte d'un revêtement souple et très adhérent tel que du silicone par exemple. L'ensemble permet de transmettre efficacement les efforts de poussée au câble.

Par ailleurs la souplesse du revêtement permet, par la mise en pression des galets, de couvrir une large gamme dans les diamètres de câble à poser.

Une platine mobile 150 sert de support au guidage du câble en avant et en arrière des galets ainsi qu'à une bague d'étanchéité et d'ancrage 700 du pistolet d'injection 200. Le diamètre du câble 300 pouvant être variable et le galet inférieur 121 étant fixe, il est indispensable de corriger la position de la platine 150 de manière à garantir un bon alignement du câble dans les galets d'entraînement 121, 122. Un système à ressorts permet d'obtenir un centrage automatique de la platine 150 sur le câble lors de la mise en contact avec le galet supérieur. Le déplacement de la platine 150 est obtenu par coulissement sur les deux colonnes de guidage 141, 142, support du galet supérieur 122.

L'ensemble des éléments du pousseur à galets est disposé sur un support inclinable 165. Le pousseur à patins est également monté sur un support inclinable non schématisé sur la figure 4. Le poids du support variant avec son angle d'inclinaison, et l'effort de poussée à fournir au câble dépendant également de l'angle d'inclinaison du support, la jauge de contrainte 170 et le capteur de longueur et de vitesse 160 sont tarés selon l'inclinaison. De même, la valeur de consigne est modifiée selon l'angle d'inclinaison du support. De plus, le support inclinable peut être fixé directement dans une chambre souterraine, sur des étais, afin de positionner le câble dans l'alignement de la conduite.

L'effort de poussée à fournir dépend de la résistance du câble à la poussée. Plus cette résistance est forte plus la force de poussée exercée sur le câble peut être élevée. En revanche, si la résistance est faible, la force de poussée à appliquer doit être moindre pour éviter une rupture du câble.

L'unité centrale permet de réguler à la fois la pression d'eau et l'effort de poussée transmis sur le câble, de manière à ce que le débit d'eau dans les conduites soit maintenu constant tout au long du parcours suivi par le câble à installer.

Pour cela, l'unité centrale agit sur le débit du moteur commandant le circuit hydraulique. Plus les pertes de charge augmentent dans les conduites tout au long du parcours, plus il faut augmenter le débit du moteur afin d'augmenter la pression d'eau. Cependant, augmenter la pression d'eau ne suffit pas à maintenir le débit constant dans les conduites. En effet, l'embout calibré 400 placé en tête de câble, qui permet de guider le câble dans les conduites, a également pour fonction de limiter les fuites et entraîne une diminution du débit d'eau le long du parcours. Pour augmenter le débit, il faut donc exercer une force de poussée plus importante sur le câble afin de le faire avancer plus vite et de diminuer les effets de limiteur de débit.

En conséquence, pour maintenir un débit constant tout au long du parcours dans les conduites, il faut réguler non seulement la pression d'eau mais aussi l'effort de poussée transmis au câble et qui commande la vitesse d'avancement du câble.

Une valeur de consigne d'effort maximum est en outre mémorisée dans l'unité centrale. La jauge de contrainte 170 mesure constamment l'effort de poussée exercé sur le câble et transmet les résultats de la mesure à l'unité centrale. Les résultats de la mesure sont ensuite comparés à la valeur de consigne. Si le seuil de consigne est dépassé, le circuit hydraulique se coupe et les moyens de poussée s'arrêtent instantanément. Ceci permet d'éviter une rupture du câble lorsque l'effort de poussée devient trop important. Au redémarrage des moyens de poussée, une consigne de vitesse de démarrage (ou d'effort de poussée), enregistrée dans une mémoire de l'unité centrale, est respectée de manière à éviter une force de poussée trop brutale sur le câble risquant d'entraîner sa rupture.

De préférence, la pression de l'eau circulant dans les conduites est régulée de telle sorte qu'elle n'excède pas 30 bar et la vitesse d'avancement (v) du câble, commandée par la force de poussée, est régulée de telle sorte qu'elle n'excède pas 40 m/min, afin de maintenir le débit d'eau constant, et inférieur ou égal à 80 l/min, tout au long du parcours défini par les conduites 500.

L'étanchéité du pistolet d'injection d'eau est importante. Une bague d'étanchéité référencée 700 est schématisée sur les figures 4 et 5. Cette bague est constituée par une succession de rondelles souples 710 (voir figure 5), par exemple en polyuréthanne, alternées avec des entretoises rigides 711, par exemple en polytétrafluoroétylène plus connu sous le nom commercial "téflon".

Les rondelles souples en mousse de polyuréthanne 710 sont ajustées au diamètre du câble avec une tolérance d'environ quelques dixièmes de mm. Elles sont en outre encochées en biais de manière à limiter les fuites d'eau. La mise en pression du module d'étanchéité 700 provoque une compression des rondelles souples 710, via les entretoises en "téflon" 711. Les entretoises en téflon 711 limitent la déformation des rondelles souples 710 tout en assurant la fonction de guidage dans le module d'étanchéité 700. Ils permettent d'autre part de limiter le frottement en cas de contact, et tolèrent un vrillage pour leur mise en place sur le câble.

Les rondelles sont placées en alternance dans le module 700 et les encoches sont décalées d'au moins 90° l'une par rapport à l'autre. L'assemblage des rondelles 710 et des entretoises 711 commence et fini par une entretoise rigide 711.

Le corps du pistolet d'injection 200 présente deux entités 210, 220 disposées selon un angle inférieur ou égal à 45° par rapport à l'axe de la conduite 500, dans le sens de la pose du câble, ce qui limite les risques de placage du câble dans le pistolet d'injection et dans l'entrée de la conduite, sous l'effet de la pression qui peut atteindre 25 bars.

La figure 6 schématise l'embout calibré 400 placé en tête de câble 300 et destiné à guider le câble dans les conduites 500. Cet embout permet en fait de réaliser l'étanchéité et le guidage de l'extrémité du câble 300 ainsi que la calibration du débit de fuite. Le matériau utilisé pour sa fabrication peut être de type polytetrafluoroéthylène, polychlorure de vinyle, ou même métallique. Cet embout est par ailleurs complètement démontable et réutilisable.

La tête 410 de l'embout se visse dans une douille de jonction 430 qui se visse elle même sur la gaine du câble 300. Le vissage de l'ensemble douille 430, câble 300 et tête 410 d'embout, assure la mise en pression d'un joint souple 420 placé sur l'extrémité du câble 300 et permettant d'assurer l'étanchéité de celle-ci. Ce joint souple est par exemple réalisé en caoutchouc ou en mastic polyuréthanne.

Dans une variante de réalisation, on peut en outre prévoir une garantie supplémentaire à l'étanchéité en positionnant un manchon thermorétractable 440 au niveau de la jonction douille 430 - gaine du câble 300. Ce manchon assure en outre le maintient de la douille 430 sur le câble.

De par sa forme en ogive, la tête d'embout 410 permet d'éviter tout accrochage dans la conduite notamment aux points de raccordement 510 de conduites ou dans les courbures.

D'autres variantes sont prévues en cas de pose multiple de câbles dans une conduite puisque l'occupation de la conduite 500 impose l'utilisation d'embouts particuliers. En effet, dans les cas de pose multiple, la forme de l'embout 410 évolue en fonction de l'occupation de la conduite, de manière à assurer les fonctions de guidage et de limiteur de débit précédemment citées, et à éviter la détérioration des gaines des câbles occupant déjà la conduite. Cela revient en fait à tronquer l'ogive de départ tout en maintenant l'ensemble des arrêtes arrondies. Sur ce principe, il est donc possible de définir une gamme d'embouts pour des configurations de pose allant de 1 à n câbles. Ainsi la figure 7A schématise la tête 411 d'un embout calibré utilisée lors de la pose d'un câble 300 dans une conduite 500 occupée par un premier câble 350. La figure 7B représente une coupe, dans la section de la conduite 500, de la tête 411 de l'embout de la figure 7A au dessus du câble 350 occupant la conduite. La figure 7C représente, en coupe, une autre tête 412 d'embout utilisée lors de l'installation d'un câble dans une conduite déjà occupée par deux câbles 350, 351.

Par ailleurs, dans certains cas il peut être avantageux de modifier l'état de surface du câble de manière à le rendre plus rugueux dans l'écoulement et donc à engendrer des forces motrices plus importantes sur celui-ci. Pour cela, on peut utiliser un outil "modificateur d'aspect", qui peut se présenter sous la forme d'un assemblage de plusieurs molettes striées, chacune d'entre elles provoquant la modification de l'état de surface du câble sur un secteur donné. Cette modification de l'état de surface est par exemple réalisée juste avant son installation dans les conduites.

Les conduites utilisées sont de préférence peu coûteuses. Ainsi, les conduites en polychlorure de vinyle, en polypropylène ou en polyéthylène haute densité, présentent de bonnes performances. On peut aussi envisager d'utiliser d'autres conduites de type réticulées, qui sont plus coûteuses mais présentent des performances accrues en termes de pertes de charge.

Le tableau ci-dessous rassemble des exemples concernant différents paramètres utilisés pour la pose de câbles de différents diamètres dans des conduites de diamètres différents, selon le procédé de l'invention.

| Diamètre conduite | Diamètre Câble | taux remplissage | Pression eau | vitesse | Débit eau |
|---|---|---|---|---|---|
| 11 mm | 6 mm | 55% | ≤5 bar | 30m/min | 80l/min |
| 50 mm | 29 mm | 58% | ≤4-6 bar | 30m/min | 80l/min |
| 33 mm | 29 mm | 88% | ≤22 bar | 30m/min | 20l/min |
| 26 mm | 22 mm | 85% | ≤20 bar | 30m/min | 30l/min |

Plus le taux de remplissage est élevé, plus il y a de pertes de charges dans les conduites et donc plus la pression d'eau doit être augmentée et le débit doit être maintenu à une valeur relativement basse. Si on souhaite avoir un débit plus élevé à pression élevée, il faut augmenter la vitesse d'avancement du câble, c'est à dire qu'il faut exercer une force de poussée plus importante sur le câble. Dans de cas, il faut redoubler de vigilance car il ne faut pas que l'effort de poussée soit trop intense si on veut éviter une rupture de câble.

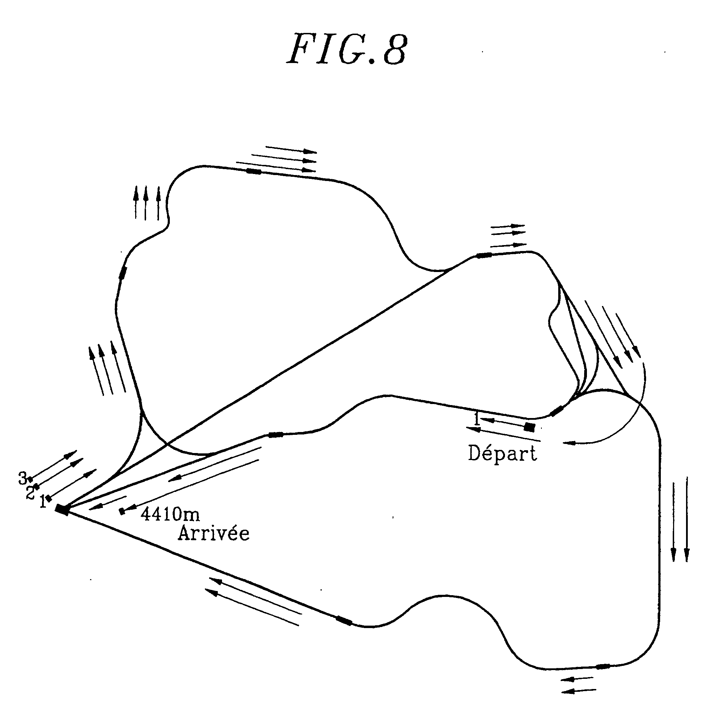

La figure 8 schématise un parcours sinueux long de 4410 m, le long duquel il est maintenant possible d'installer des câbles grâce au procédé selon l'invention. La pose d'un câble de 13 mm de diamètre dans des conduites de 32 mm de diamètre (taux de remplissage = 40%) sur un tel parcours à été réalisée avec une pression d'eau de 20 bar, un débit d'eau de 20 l/min et une vitesse d'avancement de 30 m/min. Cette pose a été effectuée sur un seul tenant, sans assistance intermédiaire et pendant 2 heures 27 minutes.

D'autre part, le procédé selon l'invention est économique car il permet de réaliser la pose de petits câbles entre le central téléphonique et un ou quelques abonnés. Il permet en effet de réaliser des poses de câbles selon la demande des abonnés. Ainsi, dans la conduite, au lieu de déposer d'emblée un seul câble de 6 mm de diamètre à 24 fibres optiques, il est possible de déposer un ou deux câbles de 4 mm de diamètre à 12 fibres optiques chacun, ou encore un à quatre câbles de 2 mm de diamètre à 6 fibres optiques chacun, et ceci en fonction de la demande des abonnés.

Le dispositif selon l'invention permet en outre le retrait de câbles aussi bien des câbles à fibres optiques que des câbles classiques en cuivre. Le retrait des câbles à fibres optiques se fait dans les mêmes conditions que leur pose. En revanche pour les câbles en cuivre les conditions de retrait sont un peu différentes.

Il apparait intéressant de récupérer les câbles en cuivre pour d'autres applications. Cependant, pour qu'ils puissent être réutilisés, ces câbles doivent être conservés intacts. Or, bien souvent il apparait nécessaire de les découper en petits tronçons pour les retirer des conduites. Le dispositif selon l'invention permet de les récupérer en un seul tenant. Pour cela, il faut, dans un premier temps, couper les épissures dans les chambres souterraines. Chaque câble de cuivre est long d'environ 300 m, ce qui correspond à la distance séparant deux chambres souterraines. On injecte ensuite de l'eau, à une première extrémité d'une conduite, et on récupère le câble en cuivre à l'autre extrémité de la conduite. Dans ce cas, le débit d'eau injectée doit être très élevé, il est par exemple de 200 l/min, afin que l'eau puisse pousser le câble par simple frottement sur celui-ci, avec une force suffisante pour le retirer.

L'injection d'eau dans la conduite pour retirer le câble permet de diviser par deux les efforts appliqués dans la conduite. Ainsi, pour retirer un câble en cuivre de 45 mm de diamètre d'une conduite de 77 mm de diamètre intérieur, en l'absence d'injection d'eau les efforts sont compris entre 160 et 220 DaN, alors qu'ils ne sont que de 80 DaN lorsque de l'eau, qui joue le rôle de lubrifiant, est injectée dans la conduite. La durée de retrait d'un tel câble est très courte puisqu'elle est d'une dizaine de minutes seulement. Le retrait nécessite cependant la mobilisation de deux agents, un sur chaque poste actif situé à chaque extrémité de la conduite.

Dans le cas de retrait de câbles, le pistolet d'injection d'eau est différent de celui utilisé pour la pose et/ou le retrait de câbles à fibres optiques et il est fixé à la conduite. Pour cela, il comporte un tuyau, dont le diamètre est du même ordre de grandeur que celui de la conduite, terminé par une couronne, d'une largeur d'une dizaine de cm, dont le diamètre est adapté à celui de la conduite. Cette couronne comporte une matière souple, par exemple du silicone, pour permettre l'étanchéité du système. Elle est d'autre part fixée dans la conduite, par serrage, au moyen d'un système de presse-étoupe. Le même type de pistolet peut être fixé à l'autre extrémité de la conduite pour faciliter la récupération du câble en cuivre qui est poussé dans le tuyau du pistolet, sous l'effet des frottements de l'eau circulant à grand débit dans la conduite.

## Revendications

1. Procédé d'introduction et/ou de retrait de câble (300) dans des conduites (500) de passage de câbles à l'intérieur desquelles est acheminé un courant d'eau, le câble (300) étant soumis à une force de poussée qui commande sa vitesse d'avancement (v), ladite force de poussée et la pression d'eau circulant dans les conduites étant régulées de manière à maintenir un débit d'eau constant à l'intérieur des conduites (500) afin de permettre l'installation de câble présentant un taux de remplissage pouvant atteindre 90% dans des conduites formant un parcours sinueux sur une longueur supérieure à 2000 m,
**caractérisé en ce que** :
le procédé comprend en outre une étape de mesure de la longueur de câble dans le conduit, ladite force de poussée et la pression de l'eau étant régulées en fonction de la longueur de câble mesurée.

2. Procédé selon la revendication 1, **caractérisé en ce que** le câble (300) à introduire et/ou à retirer est un câble à fibres optiques, et **en ce que** la pression de l'eau circulant dans les conduites (500) est régulée de telle sorte qu'elle n'excède pas 30 bar et la vitesse d'avancement (v) du câble, commandée par la force de poussée, est régulée de telle sorte qu'elle n'excède pas 40 m/min, afin de maintenir le débit d'eau constant, et inférieur ou égal à 80 l/min, tout au long du parcours défini par les conduites (500).

3. Procédé selon l'une des revendications précédentes, **caractérisé en ce qu'**il permet la pose d'un câble (300) dans des conduites occupées par un ou plusieurs câbles (350, 351).

4. Procédé selon l'une quelconque des revendications précédentes **caractérisé en ce qu'**il consiste en outre à modifier l'état de la surface du câble (300), préalablement à son introduction dans la conduite (500), afin d'augmenter les forces de frottement de l'eau sur celui-ci.

5. Procédé de retrait de câbles occupant des conduites (500) à l'intérieur desquelles est acheminé un courant d'eau, **caractérisé en ce que** le(s) câble(s) à retirer est (sont) en cuivre et **en ce que** la pression d'eau dans les conduites est inférieure à 20 bar et le débit d'eau est compris entre 100 et 200 l/min.

6. Dispositif de mise en oeuvre du procédé selon l'une des revendications 1 à 5, comprenant:
- des moyens de poussée (10; 100) aptes à assurer l'avancement du câble (300), **caractérisé en ce qu'**il comprend en outre:
- un moteur thermique (60) apte à commander, par l'intermédiaire d'un système de commutation (50), soit un circuit hydraulique de mise sous pression (30), ledit circuit hydraulique (30) étant relié à un réservoir d'eau (26) et à un pistolet d'injection (20; 200) pour injecter de l'eau dans les conduites (500); soit un circuit à compression d'air (40), ledit circuit à compression d'air (40) étant relié audit pistolet d'injection (20; 200) pour injecter de l'air comprimé dans les conduites (500), après la pose d'un câble (300), afin de les vidanger,
- des capteurs (160) pour des mesures de longueur et de vitesse d'avancement du câble (300) et une jauge de contrainte (170) apte à mesurer l'effort exercé sur le câble (300), lesdits capteurs et ladite jauge étant en liaison avec
- une unité centrale (90) apte à gérer les commandes qui lui sont transmises, pour piloter les moyens de poussée (10; 100) et le moteur thermique (60),
et **en ce que** ledit dispositif est disposé sur une remorque tractable par un véhicule léger.

7. Dispositif selon la revendication 6, **caractérisé en ce que** le corps du pistolet d'injection (200) présente deux entités (210, 220) disposées selon un angle inférieur ou égal à 45° par rapport à l'axe de la conduite (500), dans le sens de la pose du câble (300).

8. Dispositif selon la revendication 6, **caractérisé en ce que** la jauge de contrainte (170) mesure l'effort de poussée exercé sur le câble (300) et transmet les résultats de la mesure à l'unité centrale (90) qui les compare à une valeur de consigne et qui commande, lorsque cette valeur de consigne est dépassée, l'arrêt instantanné des moyens de poussée puis leur redémarrage avec un effort de poussée limité à une valeur seuil mémorisée dans l'unité centrale.

9. Dispositif selon l'une des revendications 6 à 8, **caractérisé en ce que** les moyens de poussée (10; 100) sont disposés sur un support inclinable (165).

10. Dispositif selon l'une des revendication 6 à 9, **caractérisé en ce que** les moyens de poussée (100) comprennent :
- un moteur électrique entraînant deux systèmes à mouvement continu (110, 115), munis de patins d'entraînement (112) et placés l'un au dessus de l'autre de manière à ce que le câble (300) soit pincé entre leurs patins d'entraînement (112) et poussé par lesdits patins (112) dans un mouvement d'avancement.

11. Dispositif selon l'une des revendications 6 à 9, **caractérisé en ce que** les moyens de poussée comprennent:
- un moteur électrique (600) entraînent deux galets (121, 122), via un jeu de quatre pignons (131, 132, 133, 134),
- le premier galet inférieur (121) étant fixe et sa rotation étant assurée par deux pignons (131, 132) situés de part et d'autre de celui-ci,
- le deuxième galet supérieur (122) étant mobile et monté sur deux colonnes de guidage (141, 142) qui assurent le positionnement de son axe dans l'alignement de celui du galet inférieur (121), et son entraînement étant assuré par deux autres pignons (133, 134) situés de part et d'autre de celui-ci,
- le pignon (133) intermédiaire étant maintenu en contact avec les pignons voisins (131, 134), qui entraînent respectivement le galet inférieur (121) et le galet supérieur (122), au moyen de deux brides (171, 172).

12. Dispositif selon la revendication 11, **caractérisé en ce que** la tranche des galets est incurvée de manière à épouser la forme du câble et à augmenter la surface de contact avec celui-ci.

13. Dispositif selon l'une des revendications 6 à 12, **caractérisé en ce qu'**il comprend en outre un embout (400) possédant une tête (410) en forme d'ogive, placé sur l'extrémité du câble (300) à introduire, pour guider le câble (300) dans les conduites (500) et limiter la détente de l'eau dans les conduites.

14. Dispositif selon la revendication 13, **caractérisé en ce que** la tête (410) de l'embout (400) est en polytetrafluoroéthylène, en polychlorure de vinyle, ou en métal.

15. Dispositif selon l'une des revendications 13 à 14, **caractérisé en ce que** la tête (410) de l'embout (400) est vissée dans une douille de jonction (430) qui est elle-même vissée sur la gaine du câble (300); le vissage de l'ensemble tête (410) d'embout, douille (430) et câble (300) mettant en pression un joint souple (420) placé entre l'extrémité du câble (300) et la tête (410) d'embout pour assurer l'étanchéité de l'extrémité du câble.

16. Dispositif selon la revendication 15, **caractérisé en ce qu'**un manchon thermorétractable (440) assure en outre le maintient de la douille (430) sur le câble (300).

17. Dispositif selon l'une des revendications 6 à 16, **caractérisé en ce qu'**il comprend en outre un système de sécurité manque d'eau (38).

18. Dispositif selon l'une des revendications 6 à 17, **caractérisé en ce qu'**il comprend en outre un système permettant de modifier l'état de la surface du câble (300) avant son introduction dans les conduites (500).

## Patentansprüche

1. Verfahren zum Ein- und Herausziehen von Kabel (300) in Kabeldurchziehleitungen (500), in welchen ein Wasserstrom befördert wird, wobei das Kabel (300) einer Schubkraft ausgesetzt wird, welche seine Vorschubgeschwindigkeit (v) regelt, wobei die besagte Schubkraft und der Druck des in den Leitungen fließenden Wassers so eingestellt sind, dass eine gleichmäßige Durchflussleistung im Inneren der Leitungen (500) beibehalten wird, um die Installation von Kabel mit einem Füllungsverhältnis von 90 % in den Leitungen zu erlauben, welche eine gewundene Strecke über eine Länge von mehr als 2000 m bildet, **dadurch gekennzeichnet, dass** das Verfahren ferner einen Schritt umfasst, in welchem die Kabellänge in der Leitung gemessen wird, wobei die besagte Schubkraft und der Druck des Wassers in Abhängigkeit von der gemessenen Kabellänge eingestellt werden.

2. Verfahren nach Anspruch 1, **dadurch gekennzeichnet, dass** das ein- oder herauszuziehende Kabel (300) ein Leitfaserkabel ist, und dass der Druck des in den Leitungen (500) fließenden Wassers so eingestellt ist, dass er 30 bar nicht überschreitet und die Vorschubgeschwindigkeit (v) des Kabels, welche durch die Schubkraft geregelt wird, so eingestellt ist, dass die nicht 40 m/min überschreitet, um eine Durchflussleistung beizubehalten, welche gleichmäßig ist und niedriger als oder gleich 80 l/min über die ganze, von den Leitungen (500) bestimmte Strecke ist.

3. Verfahren nach einem der vorangehenden Ansprüchen, **dadurch gekennzeichnet, dass** es die Verlegung eines Kabels (300) in von einem oder mehreren Kabeln (350, 351) besetzten Leitungen erlaubt.

4. Verfahren nach einem der vorangehenden Ansprüche, **dadurch gekennzeichnet, dass** es ferner darin besteht, den Oberflächenzustand des Kabels (300) vor seinem Einzug in die Leitung (500) zu verändern, um die Reibungskräfte des Wassers auf dieses zu erhöhen.

5. Verfahren zum Herausziehen von Kabeln (500), welche Leitungen besetzen, in welchen ein Wasserstrom befördert wird, **dadurch gekennzeichnet, dass** das (die) herauszuziehende Kabel aus Kupfer besteht(en) und dass der Wasserdruck in den Leitungen weniger als 200 bar beträgt und dass die Durchflussleistung zwischen 100 und 200 l/min liegt.

6. Vorrichtung zum Einsatz des Verfahrens nach einem der Ansprüche 1 bis 5 mit:
- Vorschubmitteln (10 ; 100), welche geeignet sind, den Vorschub des Kabels (300) zu gewährleisten, **dadurch gekennzeichnet, dass** sie ferner Folgendes umfasst :
- einen Wärmemotor (60), welcher geeignet ist, durch ein Umschaltsystem (50) entweder einen Hydraulikkreislauf zur Unterdrucksetzung (30), wobei der besagte Hydraulikkreislauf (30) an einen Wasserbehälter (26) und eine Injektionspistole (20 ; 200), um Wasser in die Leitungen (500) einzuspritzen, angeschlossen ist ; oder einen Pressluftkreislauf (40), wobei der besagte Pressluftkreislauf (40) an die besagte Injektionspistole (20 ; 200) angeschlossen ist, um nach der Verlegung eines Kabels (300) zur Entlüftung der Leitungen Pressluft in die Leitungen (500) einzuspritzen, zu steuern,
- Sensoren (160) für Messungen der Länge und der Vorschubgeschwindigkeit des Kabels (300) und einen Drehungsmessstreifen (170, welcher dazu geeignet ist, die auf das Kabel (300) ausgeübte Beanspruchung zu messen, wobei die besagten Sensoren und der besagte Drehungsmessstreifen mit Folgendem in Verbindung stehen :
- einer zentralen Einheit (90), welche die ihr übermittelten Befehle verwalten kann, um die Vorschubmittel (10 ; 100) und den Wärmemotor zu steuern,
und dass die besagte Vorrichtung auf einem Anhänger angeordnet ist, der von einem Personenkraftwagen gezogen werden kann.

7. Vorrichtung nach Anspruch 6, **dadurch gekennzeichnet, dass** der Körper der Injektionspistole (200) zwei Ganzheiten (210, 220) aufweist, welche in einem Winkel, der kleiner als oder gleich 45° zur Achse der Leitung (500) im Verlegungssinn des Kabels (300) ist, angeordnet ist.

8. Vorrichtung nach Anspruch 6, **dadurch gekennzeichnet, dass** der Drehungsmessstreifen (170) die auf das Kabel (300) ausgeübte Schubkraft misst, und die Ergebnisse an die zentrale Einheit (90) übermittelt, welche sie mit einem Sollwert vergleicht und welche, sollte dieser Sollwert überschritten sein, das sofortige Ausschalten der Vorschubmittel und dann ihre Neustarten befiehlt mit einer Schubkraft, welche durch einen in der zentralen Einheit gespeicherten Schwellenwert begrenzt ist.

9. Vorrichtung nach einem der Ansprüche 6 bis 9, **dadurch gekennzeichnet, dass** die Vorschubmittel (10 ; 100) auf einem schrägstellbaren Träger (165) angeordnet sind.

10. Vorrichtung nach einem der Ansprüche 6 bis 9, **dadurch gekennzeichnet, dass** die Vorschubmittel (100) Folgendes umfassen :
- einen Elektromotor, welcher zwei Systeme mit schleichender Bewegung (110, 115) antreibt, welche mit Antriebsplatten (112) versehen sind und so übereinander angeordnet sind, dass das Kabel (300) zwischen ihren Antriebsplatten (112) geklemmt ist und von den besagten Platten in einer Vorschubbewegung geschoben wird.

11. Vorrichtung nach einem der Ansprüche 6 bis 9, **dadurch gekennzeichnet, dass** die Vorschubmittel Folgendes umfassen :
- einen Elektromotor (600), welcher zwei Rollsteine (121, 122) durch einen Satz von vier Triebrädern (131, 132, 133, 134) antreibt,
- wobei der erste untere Rollstein (121) feststehend ist und seine Drehung durch zwei Triebräder (131, 132), welche beidseitig dessen angeordnet sind, gewährleistet wird,
- der zweite, obere Rollstein (122) beweglich ist und auf zwei Führungssäulen (141, 142) montiert ist, welche die Stellung seiner Achse in der Ausrichtung der Achse des unteren Rollsteins (121) gewährleisten, und dessen Antrieb durch zwei andere Triebräder (133, 134), welche beidseitig dessen angeordnet sind, gewährleistet wird,
- das mittlere Triebrad (133) mit den benachbarten Triebrädern (131, 134) in Kontakt gehalten wird, welche den unteren Rollstein (121) bzw. den oberen Rollstein (122) mittels zwei Flansche (171, 172) antreiben.

12. Vorrichtung nach Anspruch 11, **dadurch gekennzeichnet, dass** der Schnitt der Rollsteine so nach innen gekrümmt ist, dass er der Form des Kabels anliegt und die Kontaktoberfläche mit diesem Letzteren erhöht.

13. Vorrichtung nach einem der Ansprüche 6 bis 12, **dadurch gekennzeichnet, dass** sie ferner ein Übergangsrohrstück (400) mit einem spitzbogenförmigen Kopf (410) aufweist, welche am Ende des einzuziehenden Kabels (300), angeordnet ist, um das Kabel (300) in den Leitungen (500) zu führen und die Entspannung des Wassers in den Leitungen zu begrenzen.

14. Vorrichtung nach Anspruch 13, **dadurch gekennzeichnet, dass** der Kopf (410) des Übergangsrohrstücks (400) aus Polytetrafluorethylen, aus Vinyl Polychlorid oder aus Metall besteht.

15. Vorrichtung nach einem der Ansprüche 13 bis 14, **dadurch gekennzeichnet, dass** der Kopf (410) des Übergangsrohrstücks (400) in eine Verbindungsfassung (430) geschraubt ist, wobei die Verschraubung des Ganzen, d. h. des Kopfes (410) des Übergangsrohrstücks, der Fassung (430) und des Kabels (300) eine biegsame Dichtung (420), welche zwischen dem Ende des Kabels (300) und dem Kopf (430) des Übergangsrohrstücks angeordnet ist, unter Druck setzt, um die Dichtheit des Kabelendes zu gewährleisten.

16. Vorrichtung nach Anspruch 15, **dadurch gekennzeichnet, dass** eine wärmeeinziehbare Muffe (440) ferner die Haltung der Fassung (430) auf dem Kabel (300) gewährleistet.

17. Vorrichtung nach einem der Ansprüche 6 bis 16, **dadurch gekennzeichnet, dass** sie ferner ein Wassermangel-Sicherheitssystem (38) umfasst.

18. Vorrichtung nach einem der Ansprüche 6 bis 17, **dadurch gekennzeichnet, dass** sie ferner ein System umfasst, wodurch der Oberflächenzustand des Kabels (300) vor seinem Einzug in die Leitungen (500) verändert werden kann.

## Claims

1. Process for the introduction and/or retraction of cable (300) in cabling ducts (500) in which water is run, the cable (300) being subjected to a thrust power which controls the feed rate (v), the said thrust power and the water pressure circulating in the ducts being regulated so as to maintain a constant water flow rate inside the ducts (500) to allow the installation of cable with a degree of admission reaching up to 90% in ducts that form a sinuous routing over a distance in excess of 2,000 metres, **characterised in that** the process further comprises a stage to measure the length of the cable in the duct, the said thrust power and the water pressure being regulated in accordance with the measured length of cable.

2. Process according to claim 1, **characterised in that** the cable (300) to be introduced and/or retracted is a fibre optic cable, and **in that** the water pressure in the ducts (500) is regulated so that it does not exceed 30 bars and the feed rate (v) of the cable, controlled by the thrust power, is regulated so that it does not exceed 40 m/min, so as to maintain a constant water flow rate, inferior or equal to 80 l/min, throughout the whole length of the duct (500) routing.

3. Process according to one of the previous claims, **characterised in that** it allows a cable (300) to be laid in ducts where there are already one or more cables (350, 351).

4. Process according to any one of the previous claims, **characterised in that** it further consists in modifying the surface condition of the cable (300), prior to its introduction into the duct (500), so as to increase the frictional force of the water on the cable.

5. Process for the retraction of cable from ducts (500) in which water is run, **characterised in that** the cable(s) to be retracted is (are) made of copper and **in that** the water pressure in the ducts is less than 20 bars and the water flow rate lies between 100 and 200 l/min.

6. Implementation device of the process according to one of the claims 1 to 5, comprising:
means of thrust (10; 100) capable of ensuring the feeding of the cable (300), **characterised in that** it further comprises:
a heat engine (60) capable of powering, via a commutation system (50), either a pressurisation hydraulic circuit (30), the said hydraulic circuit (30) being connected to a water tank (26) and to an injection nozzle (20; 200) to inject water into the ducts (500); or a compressed-air circuit (40), the said compressed-air circuit (40) being connected to the said injection nozzle (20; 200) to inject compressed air into the ducts (500), after a cable (300) has been laid, so as to empty them,
sensors (160) to measure the length and feed rate of the cable (300) and a tensiometer (170) capable of measuring the strain applied to the cable (300), the said sensors and the said tensiometer being connected to
a central control unit (90) capable of managing the commands that are sent to it, to control the means of thrust (10; 100) and the heat engine (60),
and **in that** the said device is placed on a trailer to be towed by a small vehicle.

7. Device according to claim 6, **characterised in that** the body of the injection nozzle (200) has two parts (210, 220) placed according to an angle less than or equal to 45° in respect to the axis of the duct (500), in the direction in which the cable (300) is being laid.

8. Device according to claim 6, **characterised in that** the tensiometer (170) measures the thrust strain applied to the cable (300) and then transmits the measurement results to the central control unit (90) which compares them to a set value and which activates, when this set value is exceeded, the immediate shutting down of the means of thrust and then the restarting of the thrust strain restricted to a threshold value memorised in the central control unit.

9. Device according to one of claims 6 to 8, **characterised in that** the means of thrust (10; 100) are placed on an inclining support (165).

10. Device according to one of claims 6 to 9, **characterised in that** the means of thrust (100) comprise:
an electric engine driving two continuous movement systems (110, 115), fitted with drive gliders (112) and placed one on top of the other so that the cable (300) is squeezed between the two drive gliders (112) and thrust by the said gliders (112) in a forward movement.

11. Device according to one of claims 6 to 9, **characterised in that** the means of thrust comprise:
an electric engine (600) driving two cable rollers (121, 122) via a set of four gears (131, 132, 133, 134),
the first lower roller (121) being fixed and its rotation being carried out by two gears (131, 132) located either side of it,
the second upper roller (122) being mobile and mounted on two guiding columns (141, 142) which ensure the positioning of its axis in line with that of the lower roller (121), and its driving being ensured by two other gears (133, 134) located either side of it,
the middle gear (133) being held in contact with the nearby gears (131, 134), which respectively drive the lower roller (121) and the upper roller (122) via two clamping plates (171, 172).

12. Device according to claim 11, **characterised in that** the edge of the rollers is dished so as to follow the shape of the cable and increase the contact surface with it.

13. Device according to one of claims 6 to 12 **characterised in that** it further comprises an end piece (400) bearing a head (410) in rib form, placed at the end of the cable (300) to be introduced, in order to guide the cable (300) within the ducts (500) and restrict the expansion of the water in the ducts.

14. Device according to claim 13, **characterised in that** the head (410) of the end piece (400) is made of polytetrafluoroethylene, polyvinyl chloride or metal.

15. Device according to either of claims 13 to 14, **characterised in that** the head (410) of the end piece (400) is screwed into a joint sleeve (430) which itself is screwed onto the cable housing (300); the screwing of the unit comprised of the head (410) of the end piece, sleeve (430) and cable (300) puts pressure on the flexible joint (420) located between the end of the cable (300) and the head (410) of the end piece to render the far end of the cable watertight.

16. Device according to claim 15, **characterised in that** a shrink-on tube (440) also ensures the holding in place of the sleeve (430) on the cable (300).

17. Device according to one of claims 6 to 16, **characterised in that** it further comprises a safety system (38) in the case of insufficient water.

18. Device according to one of claims 6 to 17, **characterised in that** it further comprises a system allowing the modification of the surface condition of the cable (300), prior to its introduction into the ducts (500).
